(19) Europäisches Patentamt
European Patent Office
Office européen des brevets

(11) Veröffentlichungsnummer: **0 113 429**
**B1**

(12) # EUROPÄISCHE PATENTSCHRIFT

(45) Veröffentlichungstag der Patentschrift: **04.02.87**

(51) Int. Cl.⁴: **C 07 F 9/38**, C 07 F 9/30, C 07 F 9/65

(21) Anmeldenummer: **83112047.2**

(22) Anmeldetag: **01.12.83**

(54) **Verfahren zur Herstellung substituierter Phosphon- und Phosphinsäuren.**

(30) Priorität: **11.12.82 DE 3245887**

(43) Veröffentlichungstag der Anmeldung: **18.07.84 Patentblatt 84/29**

(45) Bekanntmachung des Hinweises auf die Patenterteilung: **04.02.87 Patentblatt 87/6**

(84) Benannte Vertragsstaaten: **AT BE CH DE FR GB IT LI LU NL SE**

(56) Entgegenhaltungen:
**EP-A-0 033 919**

**SYNTHESIS, Nr. 8, 1981, GEORG THIEME VERLAG, Stuttgart, New York, Seiten 643-645**

(73) Patentinhaber: **Degussa Aktiengesellschaft, Weissfrauenstrasse 9, D-6000 Frankfurt am Main 1 (DE)**

(72) Erfinder: **Drauz, Karlheinz, Dr. Dipl.- Chem., Flurstrasse 5, D-6463 Freigericht 1 (DE)**
Erfinder: **Koban, Hans Günter, Dr. Dipl.- Chem, Königsberger Strasse 6, D-8755 Alzenau (DE)**
Erfinder: **Martens, Jürgen, Dr. Dipl.- Chem., Hochstrasse 10, D-8755 Alzenau (DE)**
Erfinder: **Schwarze, Werner, Dr. Dipl.- Chem., Leerbachstrasse 117, D-6000 Frankfurt am Main 1 (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

EP 0 113 429 B1

LIBER, STOCKHOLM 1987

**Beschreibung**

Die Erfindung betrifft ein Verfahren zur Herstellung der 1-Amino-2-mercapto-2-methylpropyl-phosphonsäure oder der 1-Amino-2-mercapto-2-methylpropyl-alkylphos-phinsäuren. Diese sind pharmazeutisch wirksame Substanzen, insbesondere für die Behandlung von Entzündungen, degenerativen Gelenkkrankheiten, wie der Theumatoiden Arthritis, und der Wilson-Krankheit.

Es ist bekannt, 1-Amino-2-mercapto-propyl-phosphon- und phosphinsäuren herzustellen, indem Thiazoline-(3), gegebenenfalls als Hydrochloride, bei erhöhter Temperatur in der Schmelze oder in Gegenwart eines Lösungsmittels mit Phosphonsäure oder Phosphinsäure umgesetzt werden und schließlich der Thiazolidin-Ring gespalten wird (EP-A-33919). Nachteilig ist bei diesem Verfahren insbesondere, daß die Ausbeuten nur etwa 30% betragen.

Es ist nun ein Verfahren zur Herstellung der 1-Amino-2-mercapto-2-methylpropyl-phosphonsäure oder der 1-Amino-2-mercapto-2-methylpropyl-alkylphosphinsäuren der Formel

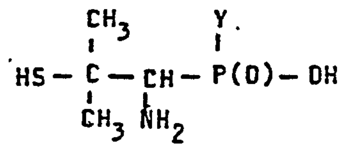
I

in der Y eine Hydroxy-Gruppe ist oder für $R_1$ steht, wobei $R_1$ eine $C_1$-$C_{12}$ Alkyl-Gruppe ist, aus Thiazolinen-(3) und Phosphorverbindungen gefunden worden, das dadurch gekennzeichnet ist, daß man Thiazoline-(3) der Formel

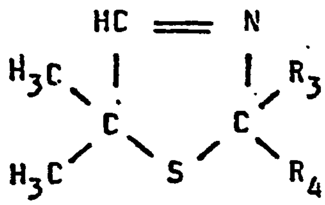
II

in der $R_3$ und $R_4$ Wasserstoff oder gleiche oder verschiedene $C_1$-$C_3$-Alkylgruppen sind oder $R_3$ und $R_4$ zusammen mit dem C-Atom eine $C_3$-$C_8$-Cycloalkylgruppe bilden, mit Estern der Formel

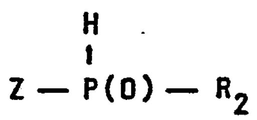
III

in der $R_2$ eine $C_1$-$C_{12}$-Alkoxy-Gruppe ist und Z für $R_1$ oder $R_2$ steht, umsetzt und die gebildeten Ester der Formel

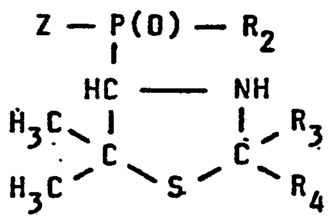
IV

unter Zusatz von mindestens stöchiometischen Mengen Wasser hydrolytisch spaltet. Dieses Verfahren ergibt wesentlich günstigere Ausbeuten als das bekannte Verfahren.

Nach dem erfindungsgemäßen Verfahren werden Verbindungen gemäß der Formel I hergestellt, in der $R_1$ vorzugweise eine verzeigte oder unverzweigte Alkyl-Gruppe mit 1 bis 4 Kohlenstoffatomen, ist. Verbindungen, die nach dem erfindungsgemäßen Verfahren zugänglich sind, sind beispielsweise 1-Amino-2-mercapto-2-methylpropyl-phosphonsäure, 1-Amino-2-mercapto-2-methylpropyl-methylphosphinsäure, 1-Amino-2-mercapto-2-methylpropyl-äthylphosphinsäure, 1-Amino-2-mercapto-2-methylpropyl-isopropylphosphinsäure und 1-Amino-2-mercapto-2-methylpropyl-butylphosphinsäure. In Frage kommende Thiazoline-(3) sind beispielsweise 5,5-Dimethyl-thiazolin-(3), 2,5,5-Trimethyl-thiazolin-(3), 2-Äthyl-5,5-dimethyl-thiazolin-(3), 2-Propyl-5,5-dimethyl-thiazolin-(3), 2,2-Dipropyl-5,5-dimethyl-thiazolin-(3), 2,2-Tetramethylen-5,5-dimethyl-thiazolin-(3), 2,2-Pentamethylen-5,5-dimethyl-thiazolin-(3) und insbesondere 2-Isopropyl-5,5-dimethyl-thiazolin-(3), 2,2-5,5-Tetramethyl-thiazolin-(3) und 2,2-Diäthyl-5,5-dimethyl-thiazolin-(3).

Erfindungsgemäß werden die Thiazoline-(3) mit Estern gemäß der Formel III umgesetzt. In dieser ist $R_2$ vorzugsweise eine Alkoxy-Gruppe, die eine verzweigte oder unverzweigte Alkyl-Gruppe mit 1 bis 4, Kohlenstoffatomen enthält. Z steht entweder für $R_1$ oder für $R_2$ mit den zuvor angegebenen Bedeutungen. In

Frage kommende Ester gemäß Formel III sind beispielsweise Phosphonsäuredimethylester, Phosphonsäurediäthylester, Phosphonsäurediisopropylester, Methylphosphinsäuremethylester, Methylphosphinsäureäthylester, Methylphosphinsäureisobutylester und Äthylphosphinsäureisobutylester.

Bei der erfindungsgemäßen Umsetzung der Thiazoline-(3) gemäß Formel II mit Estern gemäß Formel III werden die Ester gemäß Formel IV gebildet. Derartige Ester sind beispielsweise 5,5-Dimethyl-4-thiazolidinyl-phosphonsäuredimethylester, 5,5-Dimethyl-4-thiazolidinyl-phosphonsäurediäthylester, 2,5,5-Trimethyl-4-thiazolidinyl-phosphonsäuredimethylester, 2-Äthyl-5,5-dimethyl-4-thiazolidinyl-phosphonsäurediisopropylester, 2-Isopropyl-5,5-dimethyl-4-thiazolidinyl-phosphonsäure-dimethylester, 2-Isopropyl-5,5-dimethyl-4-thiazolidinyl-phosphonsäurediäthylester, 2-Isopropyl-5,5-dimethyl-4-thiazolidinyl-phosphonsäurediisoproylester, 2,2,5,5-Te-tramethyl-4-thiazolidinyl-phosphonsäurediäthylester, 2,2-Diäthyl-5,5-dimethyl-4-thiazolidinyl-phosphonsäure-dimethylester, 2,2-Diäthyl-5,5-dimethyl-4-thiazolidi-nyl-phosphonsäurediäthylester, 2,2-Tetramethylen-5,5-dimethyl-4-thiazolidinyl-phosphonsäurediäthylester, 2,2-Pentamethylen-5,5-dimethyl-4-thiazolidinyl-phosphon-säurediäthylester, 2,2-Pentamethylen-5,5-dimethyl-4-thiazolidinyl-phosphonsäurediisopropylester, 5,5-Dimethyl-4-thiazolidinyl-methylphosphinsäureiso-butylester, 2-Äthyl-5,5-dimethyl-4-thiazolidinyl-äthyl-phosphinsäureisobutylester, 2-Isopropyl-5,5-dimethyl-4-thiazolidinyl-methylphosphinsäuremethylester, 2-Isopro-pyl-5,5-dimethyl-4-thiazolidinyl-methylphosphinsäureisobutylester,2-Isopropyl-5,5-dimethyl-4-thiazolidinyl-äthylphosphinsäureisobutylester, 2,2,5,5-Tetramethyl-4-thiazolidinyl-methylphosphinsäureäthylester, 2,2-Di-äthyl-5,5-dimethyl-4-thiazolidinyl-methylphosphinsäuremethylester, 2,2-Diäthyl-5,-5-dimethyl-4-thiazoli-dinyl-methylphosphinsäureisobutylester, 2,2-Tetramethylen-5,5-dimethyl-4-thiazolidinyl-äthylphosphinsäure-isobutylester und 2,2-Pentamethylen-5,5-dimethyl-4-thiazolidinyl-methylphosphinsäureisobutylester.

Die Ester gemäß Formel IV sind neu. Die Erfindung betrifft auch diese Ester. Zur Durchführung des erfindungsgemäßen Verfahrens können die Thiazoline (II) und die Ester (III) in weitgehend beliebigen Mengenverhältnissen eingesetzt werden. Vorzugsweise werden je Mol des Esters (III) 0,7 bis 1,5 Mol, insbesondere etwa 1,0 Mol, des Thiazolins (II) angewendet. Die Umsetzung der Thiazoline (II) mit den Estern (III) erfolgt zweckmäßigerweise in flüssigem Medium, vorzugsweise in Gegenwart eines inerten Lösungsmittels. Als Lösungsmittel kommen beispielsweise aliphatische oder aromatische, gegebenenfalls chlorierte, Kohlenwasserstoffe in Frage.

Bei welchen Temperaturen die Umsetzung durchgeführt wird, richtet sich gegebenenfalls nach der Art der umzusetzenden Verbindungen und, falls ein Lösungsmittel angewendet wird, nach der Art des Lösungsmittels. Im allgemeinen ist es zweckmäßig, Temperaturen nahe dem Siedepunkt der Umsetzungsgemische zu wählen, im Falle der Nichtanwendung eines Lösungsmittel zumindest jedoch Temperaturen, bei denen das Umsetzungsgemisch als Schmelze vorliegt. In den meisten Fällen sind Temperaturen etwa von 50 bis 250 °C, insbesondere von 100 bis 190 °C, vorteilhaft.

Der Druck kann weitgehend beliebig gewählt werden, es ist jedoch im allgemeinen zweckmäßig, die Umsetzung bei Drücken durchzuführen, die vom Normaldruck nicht wesentlich abweichen. In manchen Fällen ist es wegen der Flüchtigkeit der Substanzen bei der angewendeten Temperatur erforderlich, bei einem entsprechend erhöhten Druck zu arbeiten. Zur hydrolytischen Spaltung der bei der Umsetzung gebildeten Ester (IV) werden diese in wäßrigem Medium behandelt und zwar mit mindestens stöchiometrischen Mengen Wasser. Im Falle der Phosphonsäureester sind demnach mindestens 3 Mol Wasser und im Falle der Phosphinsäureester mindestena 2 Mol Wasser je Mol der Ester erforderlich.

Die Behandlung erfolgt mit Wasser oder mit wäßrigen Säuren. Geeignet sind anorganische wie auch organische Säuren, soweit sie nicht störend und insbesondere nicht zersetzend wirken, beispielsweise Schwefelsäure oder Essigsäure. Bevorzugt wird Chlorwasserstoffsäure verwendet. Im allgemeinen sind erhöhte Temperaturen erforderlich. Vorteilhaft sind Temperaturen etwa zwischen 50° C, insbesondere zwischen 80° C, und dem Siedepunkt des Mediums. Der Druck kann auch hierbei weitgehend beliebig gewählt werden. Eine besonders bevorzugte Verfahrensweise ist, Wasserdampf abzutreiben oder Wasserdampf durchzuleiten.

**Beispiele**

A. Herstellung der Thiazodinyl-phosphonsäureester und Thiazolidinyl-alkylphosphinsäureester

1. Ein Gemisch aus 314 g (2 mol) 2-Isopropyl-5,5-dimethyl-thiazolin - (3), 276 g (2 mol) Phosphonsäurediäthylester und 300 ml Petroläther (Kp 120 bis 150°C) wurde während 15 Stunden unter Feuchtigkeitsauschluß auf 120°C gehalten und dann auf 20°C abgekühlt. Beim Abkühlen schied sich 2-Isopropyl-5,5-dimethyl-4-thiazolidinyl-phosphonsäure-diäthylester in Form farbloser Kristalle ab. Diese wurden abfiltriert, mit 1000 ml Petroläther (Kp 30 bis 70°C) gewaschen und bei 40°C und 25 mbar getrocknet. Die Ausbeute betrug 509 g, entsprechend 86%. Der Schmelzpunkt der Substanz war 68 bis 69°C. Die Elementaranalyse ergab: C = 48,84% (48,79%); H = 9,14% (8,87%); N =4,75% (4,74%); P = 10,44 % (10,49 %); S = 10,31 % (10,85 %) - (in Klammern die für $C_{12}H_{26}NO_3PS$ berechneten Werte)

2. Es wurde wie nach Beispiel 1 verfahren, jedoch wurden 342 g (2 mol) 2,2-Diäthyl-5,5-dimethyl-thiazolin-(3) eingesetzt und der gewonnene 2,2-Diäthyl-5,5-dimethyl-4-thiazolidinyl-phosphon-säurediäthylester wurde bei 25°C und 25 mbar getrocknet. Die Ausbeute betrug 489 g, entsprechend 79 %. Der Schmelzpunkt der Substanz war 40°C. Die Elementaranalyse ergab: C = 50,29% (50,46 %); H = 9,31 % (9,21 %); N = 4,51 % (4,54 %); P =

10,20 % (10,36 %); S = 9,98 % (10,01 %) - (in Klammern die für $C_{13}H_{28}NO_3PS$ berechneten Werte).
Die Spektralanalyse ergab:
$^1$H-NMR($CDCl_3$): δ=4,2 (mc, 4H) O-C$\underline{H}_2$-$CH_3$ 3,20 (d, J=19 Hz, 1H) P-C$\underline{H}$; 3,09(S,1H) N$\underline{H}$; 2,1 - 0,7 ppm (m, 22H).

3. Ein Gemisch aus 339 g (2 mol) 2,2-Tetramethylen-5,5-dimethyl-thiazolin - (3), 276 g (2 mol) Phosphonsäurediäthylester und 300 ml Petroläther (Kp 100 bis 200°C) wurde während 15 Stunden auf 105°C gehalten. Aus dem Umsetzungsgemisch wurde bei 30 mbar so lange Petroläther abgedampft, bis Kristallisation einsetzte. Der Rest wurde auf 0°C abgekühlt und filtriert. Der Filterrückstand wurde mit 500 ml kaltem Petroläther (Kp 30 bis 70°C) gewaschen und bei 30°C und 25 mbar getrocknet. Gewonnen wurden 516 g 2,2-Tetramethylen-5,5-di-methyl-4-thiazolidinyl-phosphonsäurediäthylester, entsprechend 91% Ausbeute. Der Schmelzpunkt der Substanz war 61 bis 63°C. Die Elementaranalyse ergab: C = 50,77 % (50,79 %); H = 8,60 % (8,52 %); N = 4,50 % (4,56 %); P = 10,23 % (10,08 %); S = 10,28 % (10,43 %) - (in Klammern die für $C_{13}H_{26}NO_3PS$ berechneten Werte). Die Spektralanalyse ergab:
$^1$H-NMR($CDC1_3$): δ = 4,20(mc, 4H) O-C$\underline{H}_2$-$CH_3$;
3,13(d, J=19 Hz, 1H) P-C$\underline{H}$;
75(s 1H) N$\underline{H}$;
2,3 - 1,2 ppm (m, 2OH).

4. Ein Gemisch aus 92 g (0,5 mol) 2,2-Pentamethylen-5,5-dimethyl-thiazolin - (3), 69 g (0,5 mol) Phosphonsäurediäthylester und 70 ml petroleum (Kp 140 bis 200°C) wurde während 15 Stunden auf 125°C gehalten und dann auf 0°C abgekühlt. Beim Abkühlen schied sich 2, 2-Pentamethylen-5,5-dimethyl-4-thiazolidinyl-phosphonsäurediäthylester kristallin ab. Die Substanz wurde abfiltriert, mit 50 ml n-Pentan gewaschen und während 24 Stunden bei 50°C und 30 mbar getrocknet. Die Ausbeute betrug 146 g, entsprechend 91 %. Der Schmelzpunkt war 77 bis 79°C. Die Elementaranalyse ergab: C = 52,26% (52,32 %); H = 8,81 % (8,78 %); N = 4,22 % (4,36 %) (in Klammern die für $C_{14}H_{28}NO_3PS$ berechneten Werte).
Die Spektralanalyse ergab:
$^1$H-NMR($CDCl_3$): δ = 4,20(mc, 4H) O-C$\underline{H}_2$-$CH_3$;
3,25(d, J=19 Hz, 1H) P-C$\underline{H}$;
2,0 -1,0 ppm (m, 22H)

5. 100 g (0,7 mo1)2,2,5,5-Tetramethyl-thiazolin-(3) wurden bei 20°C mit 104 g (0,8 mol) Phosphonsäurediäthylester vermischt. Die Mischung wurde 14 Stunden auf 20°C und 12 Stunden auf 105°C gehalten. Dann wurde destilliert. Der gebildete 2,2,5,5-Tetramethyl-4-thiazolidinyl-phosphonsäurediäthylester fiel als gelbes Öl an. Sein Kochpunkt war 104 bis 106°C bei 0,4 mbar. Nach Zugabe von Petroläther (Kp 30 bis 70°C) und Abkühlung kristallisierte aus dem Öl der 2,2,5,5-Te-tramethyl-4-thiazolidinyl-phosphonsäurediäthylester. Die Ausbeute betrug 145 g, entsprechend 75 %, bezogen auf das eingesetzte Thiazolin. Die Elementaranalyse des gewonnenen Esters ergab: C = 46,88 (46,97 %); H = 8,89 % (8,54 %); N = 4,97 % (4,98 %); P = 11,11 % (11,03 %); S = 11,40 % (11,39 %) - (in Klammern die für $C_{11}H_{24}NO_3PS$ berechneten Werte). 6. Ein Gemisch aus 12,6 g (0,08 mol) 2-Isopropyl-5,5-dimethyl-thiazolin- (3), 10,9 g (0,08 mol) Methylphosphinsäureisobutylester und 15 ml Petroleum (Kp 140 bis 200°C) wurde während 15 Stunden auf 120°C gehalten und dann auf 0°C abgekühlt. Beim Abkühlen schied sich 2-Isopropyl-5,5-dimethyl-4-thiazolidinyl-methylphosphinsäureisobutylester ab. Die Substanz wurde abfiltriert, mit 10 ml kaltem Petroläther (Kp 30 bis 70°C) gewaschen und während 24 Stunden bei 40°C und 20 mbar getrocknet. Die Ausbeute betrug 18,5 g, entsprechend 79 %. Der Schmelzpunkt der Substanz war 91 bis 93°C. Die Elementaranalyse ergab: C = 53,11 % (53,22 %); H = 9,56 % (9,62 %); N = 4,69 % (4,77 %); P = 10,89 % (10,92 %); S = 10,57 % (10,56 %) - (in Klammern die für $C_{13}H_{28}NO_2PS$ berechneten Werte).
Die Spektralanalyse ergab:
$^1$H-NMR($CDCl_3$): δ= 4,40 (d, J=7 Hz, 1H)-C$\underline{H}$;
3,73 (mc, 2H) CH-C$\underline{H}_2$;
2,80 (d, J=10 Hz, 1IH) P-C$\underline{H}$;
2,50 (s, sH) N$\underline{H}$;
2,24 - 1,40 (m, 11H);
1,15 - 0,7 ppm (m, 6H).

7. Es wurde wie nach Beispiel 6 verfahren, jedoch wurden 14,7 g (0,08 mol) 2,2-Pentamethylen-5,5-dimethyl-thiazolin-(3) eingesetzt. Gewonnen wurden 19,6 g 2,2-Pentamethylen-5,5-dimethyl-4-thiazo-lidinyl-methylphosphinsäureisobutylester, entsprechend 77 % Ausbeute. Der Schmelzpunkt der Substanz war 94 bis 96°C. Die Elementaranalyse ergab: C = 56,41 % (56,40 %); H = 9,66 % (9,46 %); N = 4,36 % (4,38 %); P = 10,06 % (10,04 %); S = 9,76 % (9,70 %) - (in Klammern die für $C_{15}H_{30}NO_2PS$ berechneten Werte). Die Spektralanalyse ergab:
$^1$H-NMR($CDC1_3$): δ = 3,78 (mc, 2H) O-C$\underline{H}_2$-$CH_3$;
3,12 (d, J = 10 Hz, 1H) P-C$\underline{H}$;
2,78 (s, 1H) N$\underline{H}$;
2,15 - 1,2 (m, 20H);
0,93 ppm (d, J=7 Hz)(C$\underline{H}_3$)$_2$CH;

B. Hydrolytische Spaltung der Thiazolidinyl-phosphonsäureester und Thiazolidinyl-alkylphosphinsäureester

1. 2,95 g (0,01 mol) des nach Beispiel A 1 gewonnenen 2-Isopropyl-5,5-dimethyl-4-thiazolidinyl-phosphonsäurediäthylesters wurden mit 20 ml halbkonzentrierter wäßriger Chlorwasserstoffsäure versetzt. Die

Mischung wurde während 5 Stunden unter Rückfluß auf Siedetemperatur gehalten, dann einer Wasserdampfdestillation unterworfen und schließlich zur Trockne gebracht. Der Rückstand wurde in 8 ml Wasser gelöst, die Lösung mit Aktivkohle geklärt, mit 40 ml Äthanol vermischt und durch Zugabe von Triäthylamin auf den pH-Wert 5 eingestellt. Hierbei schied sich die 1-Amino-2-mercapto-2-methylpropyl-phosphonsäure in Form farbloser Kristalle ab. Sie wurde abfiltriert, nacheinander mit 10 ml Äthanol und 10 ml Dimethyläther gewaschen und schließlich bei 80°C und 25 mbar getrocknet. Die Ausbeute betrug 1,70 g, entsprechend 92 %. Der Schmelzpunkt der Substanz war 242 bis 246°C.

2. 30,9 g (0,1 mol) des nach Beispiel A 2 gewonnenen 2,2-Diäthyl-5,5-dimethyl-4-thiazolidinyl-phosphonsäurediäthylesters wurden nacheinander mit 40 ml 12 n wäßriger Chlorwasserstoffsäure und 210 ml Wasser versetzt. Die Mischung wurde 23 Stunden lang einer Wasserdampfdestillation unterworfen. Hierbei wurden 4000 ml Wasser destilliert. Das verbliebene Umsetzungsgemisch wurde in einem Rotationsverdampfer zur Trockne gebracht. Der Rückstand wurde unter Erwärmen in 40 ml 6 n wäßriger Chlorwasserstoffsäure gelöst, die Lösung mit 400 ml Äthanol versetzt und durch Zugabe von Trimethylamin auf den pH-Wert 5 eingestellt. Hierbei schied sich die 1-Amino-2-mercapto-2-methylpropyl-phosphonsäure in Form farbloser Kristalle ab. Sie wurde unter Absaugen filtriert, nacheinander mit Äthanol und Diäthyläther gewaschen und schließlich trokken gesaugt. Die Ausbeute betrug 16,1 g, entsprechend 87 %. Der Schmelzpunkt der Substanz war 243 bis 246°C.

3. 4,2 g des nach 8eispiel A 5 gewonnenen 2,2-5,5-Tetramethyl-4-thiazolidinyl-phosphonsäurediäthyl-esters wurden in 20 ml halbkonzentrierter wäßriger Chlorwasserstoffsäure 5 Stunden lang unter Rückfluß auf Siedetemperatur gehalten. Die Mischung wurde zur Trockne eingedampft, der Rückstand unter Erwärmen in 10 ml Wasser gelöst und die Lösung mit Aktivkohle geklärt. Beim Abkühlen schied sich 1-Ami-no-2-mercapto-2-methylpropyl-phosphonsäure kristallin ab. Die Substanz wurde abfiltriert und mit 3 ml WWasser gewaschen. Das Filtrat wurde durch Zugabe von Triäthylamin auf den pH-Wert 3 eingestellt und dann mit dem gleichen Volumen Äthanol versetzt. Hierbei schied sich weitere 1-Amino-2-mercapto-2-methylpropyl-phosphonsäure ab. Die Ausbeute betrug insgesamt 2,5 g, entsprechend 89 %. Der Schmelzpunkt der Substanz war 249 bis 251°C.

4. Es wurde unmittelbar das nach Beispiel A 5 erzeugte Umsetzungsgemisch, wie es vor der Destillation vorlag, angewendet und mit 790 ml halbkonzentrierter wäßriger Chlorwasserstoffsäure versetzt. Die Mischung wurde 5 Stunden unter Rückfluß auf Siedetemperatur gehalten, dann 2 Stunden einer Wasserdampfdestillation unterworfen und schließlich zur Trockne gebracht. Der Rückstand wurde in 345 ml Wasser gelöst, die Lösung mit Aktivkohle geklärt, mit 345 ml Äthanol vermischt und durch Zugabe von Triäthylamin auf den pH-Wert 3 eingestellt. Die hierbei abgeschiedene 1-Amino-2-mer-capto-2-methylpropyl-phosphonsäure wurde abfiltriert, mit Äthanol und Diäthyläther gewaschen und schließlich bei 80°C und 25 mbar getrocknet. Die Ausbeute betrug 85,3 g, entsprechend 89 % Der Schmelzpunkt der Substanz war 249 bis 251°C.

5. 2,93 g (0,01 mol) des nach Beispiel A 6 gewonnenen 2-Isopropyl-5,5-dimethyl-4-thiazolidinyl-methylphosphinsäureisobutylesters wurden in 50 ml halbkonzentrierter wäßriger Chlorwasserstoffaäure suspendiert. Die Mischung wurde 2,5 Stunden unter Rückfluß auf Siedetemperstur gehalten, dann 4 Stunden einer Wasserdampfdestillation unterworfen und schließlich in einem Rotationsverdampfer zur Trockne gebracht. Der Rückstand wurde in 30 ml Wasser gelöst. Die Lösung wurde mit 100 ml Äthanol vermischt und durch Zugabe von Triäthylamin auf den pH-Wert 5,1 eingestellt. Hierbei schied sich 1-Amino-2- mercapto-2-methylpropyl-methylphosphinsäure in Form farbloser Kristalle ab. Die Substanz wurde abiltriert, mit einem Gemisch aus Propanol-(2) und Methyl-tert.-butyläther gewaschen und schließlich getrocknet. Die Ausbeute getrug 1,72 g, entsprechend 94 %. Der Schmelzpunkt war 221°C.

**Patentansprüche**

1. Verfahren zur Herstellung der 1-Amino-2-mercapto-2-methylpropyl-phosphonsäure oder der 1-Amino-2-mercapto-2-methylpropyl-alkylphosphinsäuren der Formel

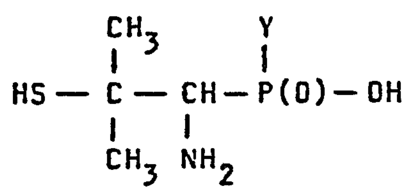

I

in der Y eine Hydroxy-Gruppe ist oder für $R_1$ steht, wobei $R_1$ eine $C_1$-$C_{12}$-Alkyl-Gruppe ist, aus Thiazolinen-(3) und Phosphorverbindungen, dadurch gekennzeichnet, daß man Thiazoline-(3) der Formel

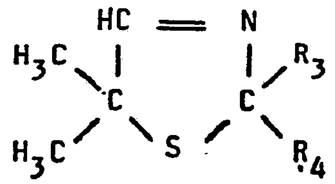

II

in der $R_3$ und $R_4$ Wasserstoff oder gleiche oder verschiedene $C_1$-$C_3$-Alkylgruppen sind oder $R_3$ und $R_4$ zusammen mit dem C-Atom eine $C_3$-$C_8$-Cycloalkylgruppe bilden, mit Estern der Formel

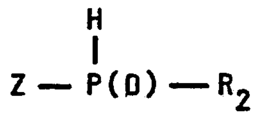

III

in der $R_2$ eine $C_1$-$C_{12}$-Alkoxy-gruppe ist, und, Z für $R_1$ oder $R_2$ steht, umsetzt und die gebildeten Ester der Formel

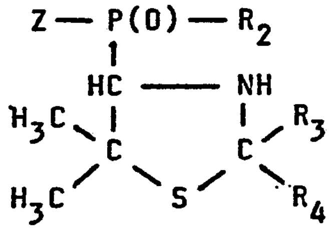

IV

unter Zusatz von mindestens stöchiometrischen Mengen Wasser hydrolytisch spaltet.

2. Ester der Thiazolidinyl-phosphonsäure oder der Thiazolidinyl-alkylphosphinsäuren der Formel

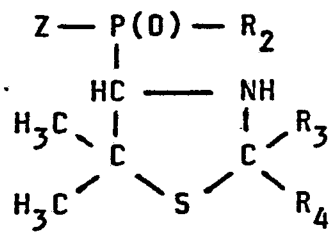

IV

in der Z für $R_1$ oder $R_2$ steht, wobei $R_1$ eine Alkyl-Gruppe und $R_2$ eine Alkoxy-Gruppe ist, und in der $R_3$ und $R_4$ Wasserstoff oder gleiche oder verschiedene oder miteinander zu einem Ring geschlossene Alkyl-Gruppen

## Claims

1. A process for the preparation of 1-amino-2-mercapto-2-methylpropyl-phosphonic acid or 1-amino-2-mercapto-2-methylpropyl-alkylphosphinic acids corresponding to the formula

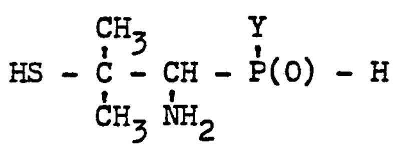

I

in which Y is a hydroxy group or represents $R_1$, wherein $R_1$ is a $C_1$-$C_{12}$ alkyl group, from 3-thiazolines and phosphorus compounds, characterised in that 3-thiazolines correspond-ding to the formula

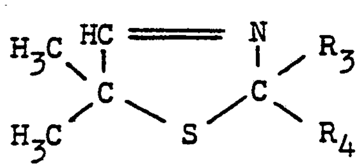

II

in which $R_3$ and $R_4$ represent hydrogen or $C_1$-$C_3$-alkyl groups which may be the same or different or $R_3$ and $R_4$ together with the C-atom together form a $C_3$-$C_8$ cycloalkyl group are reacted with esters corresponding to the

formula

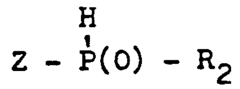

III

in which $R_2$ is a $C_1$-$C_{12}$ alkoxy group and Z represents $R_1$ or $R_2$ and the resultant esters corresponding to formula

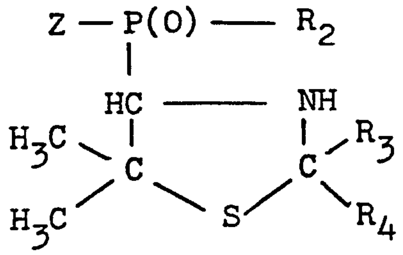

IV

are hydrolysed by addition of at least stoichiometric quantities of water.

2. Esters of thiazolidinyl phosphonic acid or thiazolidinyl alkylphosphinic acids corresponding to the formula

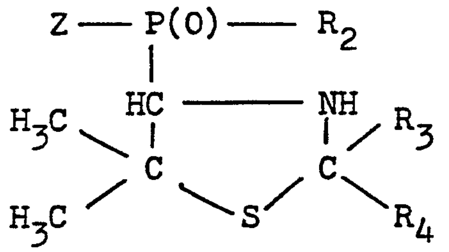

IV

in which Z represents $R_1$ or $R_2$, wherein $R_1$ is an alkyl group and $R_2$ an alkoxy group, and in which $R_3$ and $R_4$ represent hydrogen or are the same or different or represent alkyl groups when joined together to form a ring.

**Revendications**

1°) Procédé pour la fabrication de l'acide 1-amino-2-mercapto-2-méthylpropyl-phosphonique ou de l'acide 1-amino-2-mercapto-2-méthylpropyl-alcoyl-phosphinique répondant à la formule:

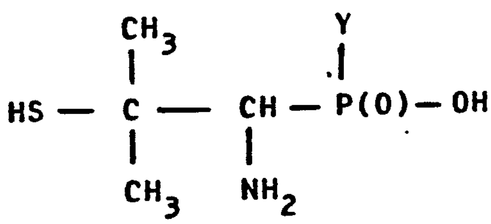

I

où Y représente un groupe hydroxy, ou remplace $R_1$, $R_1$ étant un groupe alcoyl en $C_1$ à $C_{12}$, à partir de thiazoline-(3) et composés du phosphore, procédé caractérisé en ce que l'on fait réagir une thiazoline-(3) répondant à la formule:

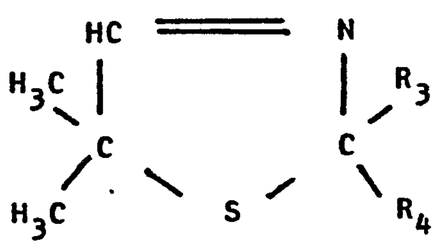

II

où $R_3$ et $R_4$ sont un hydrogène ou des groupes alcoyl en $C_1$ à $C_3$, semblables ou différents, ou $R_3$ et $R_4$ forment, en commun avec l'atome de carbone, un groupe cycloalcoyl en $C_3$ à $C_8$, avec des esters de formule:

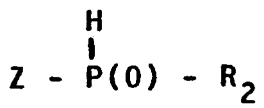

III

où $R_2$ est un groupe alcoxy en $C_1$ à $C_{12}$ et Z est mis pour $R_1$ ou $R_2$ et sépare l'ester formé répondant à la formule:

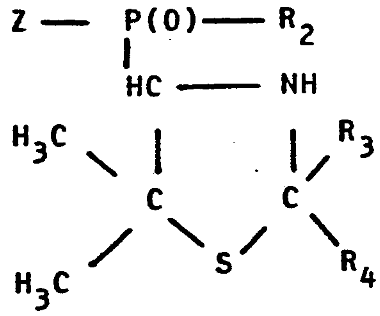

IV

par hydrolyse, en ajoutant une quantite d'eau au moins stoechiométrique.

2°) Ester de l'acide thiazolidinylphosphonique, ou de l'acide thiazolidinyl-alcoyl-phosphinique de formule:

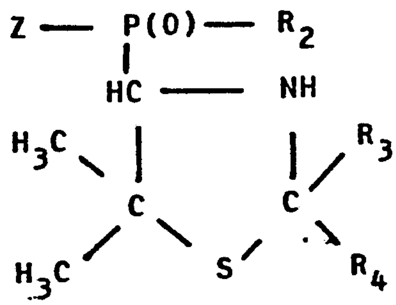

IV

où Z remplace $R_1$ ou $R_2$, pendant que $R_1$ est un groupe alcoyl et $R_2$, un groupe alcoxy, et dans laquelle $R_3$ et $R_4$ sont un hydrogéne ou des groupes alcoyl semblables ou différents ou réunis en un cycle fermé.